# EUROPÄISCHE PATENTSCHRIFT

(11) **EP 2 388 159 B1**
(45) Veröffentlichungstag und Bekanntmachung des Hinweises auf die Patenterteilung: **20.03.2019**
(21) Anmeldenummer: 11162740.2
(22) Anmeldetag: 15.04.2011
(51) Int. Cl.: B60H 1/00, F04D 29/42

(54) **Kraftfahrzeugklimaanlage**
Motor vehicle air conditioning
Climatisation de véhicule automobile

(30) Priorität: 17.05.2010 DE 102010029008
(43) Veröffentlichungstag der Anmeldung: 23.11.2011
(73) Patentinhaber: MAHLE Behr GmbH & Co. KG, 70469 Stuttgart (DE)
(72) Erfinder: Lang, Matthias, 85748 Garching (DE); Schaake, Norman, 71706, Markgröningen (DE)
(74) Vertreter: Grauel, Andreas

(56) Entgegenhaltungen:
- EP-A1- 2 107 251
- EP-A1- 2 154 013
- EP-A2- 2 333 348
- DE-B- 1 070 337

## Beschreibung

Die Erfindung betrifft eine Kraftfahrzeugklimaanlage gemäß dem Oberbegriff des Anspruches 1.

Kraftfahrzeugklimaanlagen dienen dazu, die einem Innenraum eines Kraftfahrzeuges zuzuführende Luft zu kühlen und/oder zu erwärmen. Hierzu weist die Kraftfahrzeugklimaanlage ein Gehäuse auf und innerhalb des Gehäuses ist ein Kältemittelverdampfer zum Kühlen der Luft und eine Heizeinrichtung zum Erwärmen der Luft vorhanden. Um die dem Fahrzeuginnenraum einzuleitende Luft zu fördern, ist ein Radialgebläse vorhanden mit einem Laufrad mit Schaufeln und einem Gebläseelektromotor. Der Gebläseelektromotor ist mittels einer Welle mit dem Laufrad mit Schaufeln verbunden und treibt dieses an, so dass das Laufrad mit den Schaufeln eine Rotationsbewegung um eine Rotationsachse ausführt. Das Gebläsegehäuse weist dabei eine axiale Einströmöffnung, durch welche die Luft axial zu der Rotationsachse in das Radialgebläse einströmt, und eine tangentiale Ausströmöffnung auf, durch welche die Luft aus dem Gebläsegehäuse wieder ausgeleitet wird und anschließend zu dem Kältemittelverdampfer und der Heizeinrichtung geleitet wird.

Innerhalb des Gebläsegehäuses, innerhalb dessen das Laufrad mit den Schaufeln angeordnet ist, können sich zwischen dem sich spiralförmig aufweitendem Gebläsegehäuse und dem Laufrad mit den Schaufeln aufgrund von ablöseartigen Strukturen inhomogene Geschwindigkeitsverteilungen der Luft innerhalb des Gebläsegehäuses ausbilden. Dies führt zu niederfrequenten Geräuschen, die auch im Fahrzeuginnenraum als besonders störend wahrgenommen werden können,

Das Gebläsegehäuse weist eine Gebläsezunge auf, die den Beginn der Spiralentwicklung und einen Teil der Ausströmöffnung in Rotationsrichtung des Laufrades mit den Schaufeln darstellt. Es ist bekannt, dass an dieser Gebläsezunge ein schräger Zungenfortsatz angebracht sein kann, sodass diese entgegen der Rotationsrichtung des Lüfterrades spitz zuläuft. Die von einer derartigen Gebläsezunge erzielte homogene Gescliwindigkeitsverteilung der Luft innerhalb des Radialgebläses ist jedoch im Allgemeinen nicht ausreichend.

Dokument EP 2 107 251 A1 offenbart eine Kraftfahrzeugklimaanlage gemäß dem Oberbegriff des Anspruchs 1.

Die Aufgabe der vorliegenden Erfindung besteht deshalb darin, eine Kraftfahrzeugklimaanlage zur Verfügung zu stellen, bei dem das Radialgebläse nur sehr geringe Geräuschemission erzeugt. Die Kraftfahrzeugklimaanlage soll in der Herstellung preiswert sein und zuverlässig im Betrieb arbeiten.

Diese Aufgabe wird gelöst mit einer Kraftfahrzeugklimaanlage, umfassend ein Gehäuse, ein Radialgebläse mit einem Gebläsegehäuse, das eine axiale Einströmöffnung und eine tangentiale Ausströmöffnung aufweist, mit einem innerhalb des Gebläsegehäuses angeordneten Laufrad mit Schaufeln von dem um eine Rotationsachse eine Rotationsbewegung ausführbar ist, vorzugsweise einen Kältemittelverdampfer zum Kühlen einer einem Fahrzeuginnenraum zuzuführenden Luft, eine Heizeinrichtung zum Erwärmen der dem Fahrzeuginnenraum zuzuführenden Luft, wobei an dem Gebläsegehäuse innenseitig wenigstens ein Strömungsstörkörper ausgebildet ist.

Der wenigstens eine Strömungsstörkörper, insbesondere einteilig ausgebildet zusammen mit dem Gebläsegehäuse, führt zu einer homogeneren Geschwindigkeitsverteilung der von dem Laufrad mit den Schaufeln innerhalb des Gebläsegehäuses umgewälzten Luft, so dass dadurch die Geräuschemissionen reduziert werden.

In der Erfindung ist an dem wenigstens einen Strömungsstörkörper der radiale Abstand zwischen dem wenigstens einen Strömungsstörkörper und den Schaufeln kleiner, z. B. um 1 bis 15 mm kleiner, als außerhalb des wenigstens einen Strömungsstörkörpers, der radiale Abstand zwischen dem Gebläsegehäuse und den Schaufeln in einem bezüglich der Rotationsachse tangentialen Abstand von weniger als 5 cm, 3 cm oder 1 cm zu dem wenigstens einen Strömungsstörkörper. Der wenigstens eine Strömungsstörkörper verringert somit die Strömungsquerschnittsfläche in radialer Richtung zwischen dem Gebläsegehäuse und den Schaufeln an dem Laufrad, so dass es in dem Bereich des wenigstens einen Strömungsstörkörpers zu einem Sekundärströmungssystem der Luft innerhalb des Gebläsegehäuses zwischen dem Gebläsegehäuse und den Schaufeln an dem Laufrad kommt und dadurch insgesamt eine homogenere Geschwindigkeitsverteilung der Luft innerhalb des Gebläsegehäuses die Folge ist. Dadurch können niederfrequente Störgeräusche an dem Radialgehäuse signifikant reduziert werden.

In der Erfindung ist der wenigstens eine Strömungsstörkörper ausschließlich an einem Projektionsbereich der Schaufeln senkrecht zu der Rotationsachse auf das Gebläsegehäuse ausgebildet.

In einer zusätzlichen Ausgestaltung nimmt der radiale Abstand zwischen den Schaufeln des Laufrades und dem Gebläsegehäuse von der Gebläsezunge an der Ausströmöffnung in Rotationsrichtung des Laufrades mit den Schaufeln, vorzugsweise stetig, zu ohne Berücksichtigung des wenigstens einen Strömungsstörkörpers, so dass dadurch das Gebläsegehäuse an diesem Projektionsbereich spiralförmig ausgebildet ist und damit der zur Verfügung stehende Strömungsraum zwischen dem Gebläsegehäuse und den Schaufeln des Laufrades in Rotationsrichtung des Laufrades von der Gebläsezunge an dem Gebläsegehäuse an der Ausströmöffnung bis zu einem Endrand, welcher der Gebläsezunge gegenüber liegt, an der Ausströmöffnung, vorzugsweise stetig, zunimmt ohne Berücksichtigung des wenigstens einen Strömungsstörkörpers.

In einer ergänzenden Ausführungsform ist der wenigstens eine Strömungsstörkörper zusätzlich in einem axialen Abstand in Richtung der Rotationsachse zu dem Projektionsbereich an dem Gebläsegehäuse ausgebildet.

Vorzugweise beträgt der axiale Abstand in Richtung der Rotationsachse weniger als 5 cm, 3 cm, 1 cm oder 0,5 cm.

In einer Variante ist der wenigstens eine Strömungsstörkörper, insbesondere ausschließlich, an einem Anfangsabschnitt des Gebläsegehäuses ausgebildet und der Anfangsabschnitt beginnt an der Ausströmöffnung an der Gebläsezunge des Gebläsegehäuses in einer tangentialen Richtung in Rotationsrichtung des Laufrades mit Schaufeln.

Zweckmäßig weist der Anfangsabschnitt eine Ausdehnung zwischen einer ersten und zweiten Halbgeraden auf und die erste und zweite Halbgerade schneiden sich in einem Schnittpunkt und der Schnittpunkt der Rotationsachse des Laufrades mit den Schaufeln entspricht und die erste und zweite Halbgerade stehen senkrecht auf der Rotationsachse.

In einer weiteren Ausführungsform spannen die erste und zweite Halbgerade einen Winkel von weniger als 150°, 120° oder 90° auf und die erste Halbgerade ist an der Gebläsezunge des Gebläsegehäuses an der Ausströmöffnung angeordnet oder ist einem Winkel von weniger als 20° oder 10° in Richtung der Rotationsrichtung des Laufrades zu der Gebläsezunge ausgerichtet und die zweite Halbgerade spannt den Winkel in Richtung der Rotationsrichtung des Laufrades von der ersten Halbgerade zu der zweiten Halbgerade auf.

Insbesondere weist der wenigstens eine Strömungsstörkörper in einem Schnitt mit einer Schnittebene, so dass die Rotationsachse in der Schnittebene liegt, eine im Wesentliche V-förmige Kontur an einer Innenseite auf und/oder die Kraftfahrzeugkiimaanlage weist mehrere Strömungsstörkörper auf und/oder die Strömungsstörkörper sind als Rippen an dem Gebläsegehäuse ausgebildet.

In einer weiteren Ausgestaltung ist an dem Gebläsegehäuse an der Ausströmöffnung eine schräge Gebläsezunge ausgebildet und/oder das Radialgebläse umfasst einen Gebläseelektromotor zum Antrieb des Laufrades mit den Schaufeln.

Vorzugsweise ist der Gebläseetektromotor mit einer Antriebswelle mit dem Laufrad mit Schaufeln verbunden.

In einer weiteren Ausgestaltung sind innerhalb des Gehäuses der Kraftfahrzeugklimaanlage der Kältemittelverdampfer und die elektrische Heizeinrlchtung angeordnet.

In einer weiteren Ausgestaltung weist die Kraftfahrzeugklimaanlage keinen oder einen Wärmeübertrager oder Wärmeaustauscher als Heizeinrichtung auf, weicher von einem Kühlmittel durchflossen wird zur Erwärmung der durch die Kraftfahrzeugklimaanlage geleiteten Luft

In einer weiteren Ausgestaltung weist die Kraftfahrzeugklimaanlage wenigstens einen Kanal zum Durchleiten von Luft auf.

In einer Variante sind der Kältemittelverdampfer und/oder die, vorzugsweise elektrische, Heizeinrichtung innerhalb des wenigstens einen Kanales angeordnet.

In einer ergänzenden Ausgestaltung weist die Kraftfahrzeugklimaanlage wenigstens eine Luftleiteinrichtung, z. B. wenigstens eine Luftklappe und/oder wenigstens einen Schirm und/oder wenigstens ein Rollband, auf, mittels der oder denen die durch den wenigstens einen Kanal leitbare Luftmenge steuerbar ist.

Insbesondere bestehen das Gehäuse und/oder das Gebläsegehäuse der Kraftfahrzeugklimaanlage wenigstens teilweise aus Kunststoff.

In einer ergänzenden Ausführungsform ist das Gebläsegehäuse Bestandteil des Gehäuses.

Zweckmäßig ist der wenigstens eine Kanal zum Durchleiten von Luft von einer Wandung des Gehäuses begrenzt.

In einer weiteren Variante sind das Gehäuse und/oder das Gebläsegehäuse ein- oder mehrteilig.

Im Nachfolgenden werden Ausführungsbeispiele der Erfindung unter Bezugnahme auf die beigefügten Zeichnungen näher beschrieben. Es zeigt:
- Fig. 1: einen Querschnitt einer Kraftfahrzeugklimaanlage,
- Fig. 2: eine perspektivische Ansicht eines Gebläsegehäuses in einem ersten Ausführungsbeispiel,
- Fig. 3: einen Teilschnitt des Gebläsegehäuses gemäß Fig. 2 parallel zu einer Rotationsachse,
- Fig. 4: einen Schnitt eines ersten Teils des Gebläsegehäuses gemäß Fig. 2 senkrecht zu der Rotationsachse,
- Fig. 5: einen Schnitt eines zweiten Teils des Gebläsegehäuses gemäß Fig. 2 senkrecht zu der Rotationsachse,
- Fig. 6: eine perspektivische Teilansicht des Gebläsegehäuses in einem zweiten Ausführungsbeispiel und
- Fig. 7: einen Schnitt des Gebläsegehäuses gemäß Fig. 2 parallel zu der Rotationsachse in dem ersten Ausführungsbesspiel.

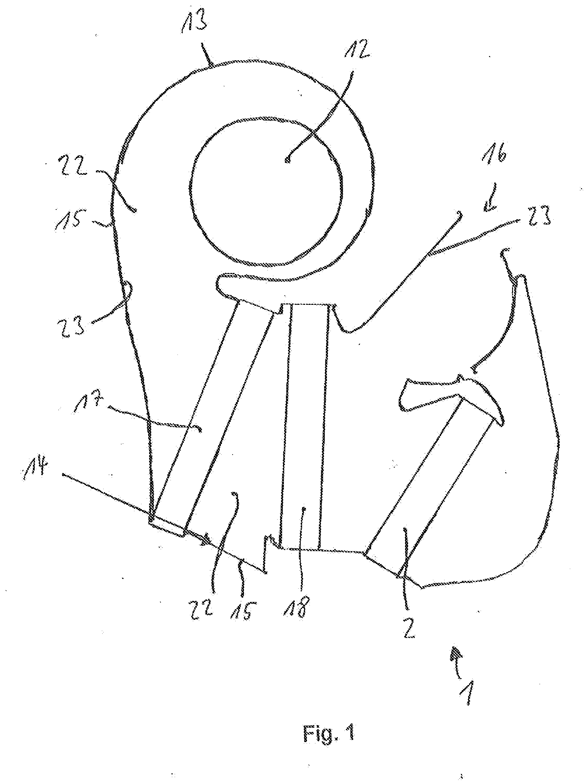

Fig. 1 zeigt eine Kraftfahrzeugklimaanlage 1. In einem mehrteiligen Gehäuse 13 mit einer Bodenwandung 14 und einem Austrittsabschnitt 16 ist ein Radialgebläse 12, ein Filter 17, ein Kältemittelverdampfer 18 und eine elektrische Heizeinrichtung 2 als Wärmeübertrager angeordnet. Das Gehäuse 13 bildet somit einen Kanal 22 zum Durchleiten der Luft. Gehäusewandungen 15 des Gehäuses 13 weisen an der Innenseite eine Oberfläche 23 auf, welche den Kanal 22 begrenzen. Die Luft für den Innenraum eines Kraftfahrzeuges wird mittels des Radialgebläses 12 durch den Filter 17, den Kältemittelverdampfer 18 sowie die elektrische Heizeinrichtung 2 geleitet. Der Kältemittelverdampfer 18 dient zum Kühlen der durch die Kraftfahrzeugklimaanlage 1 geleiteten Luft.

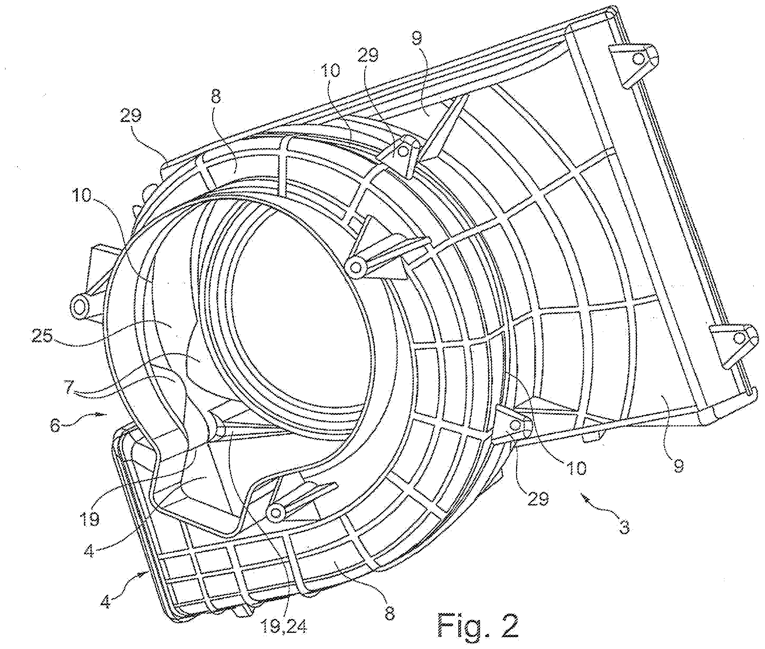

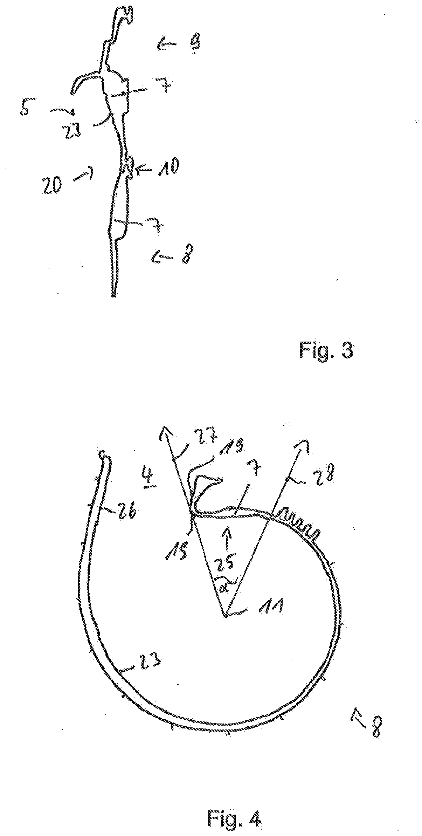

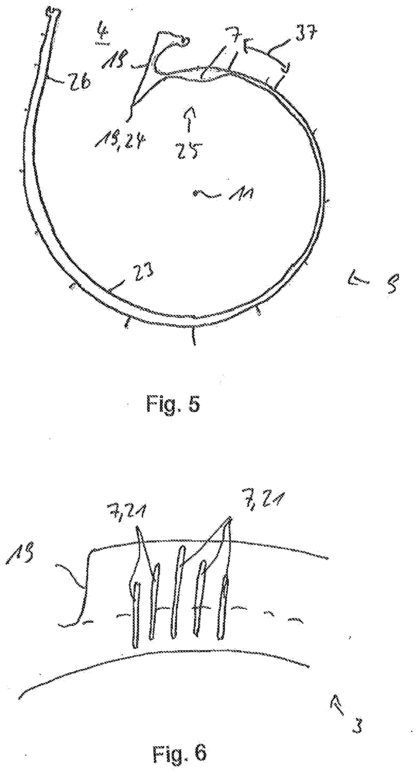

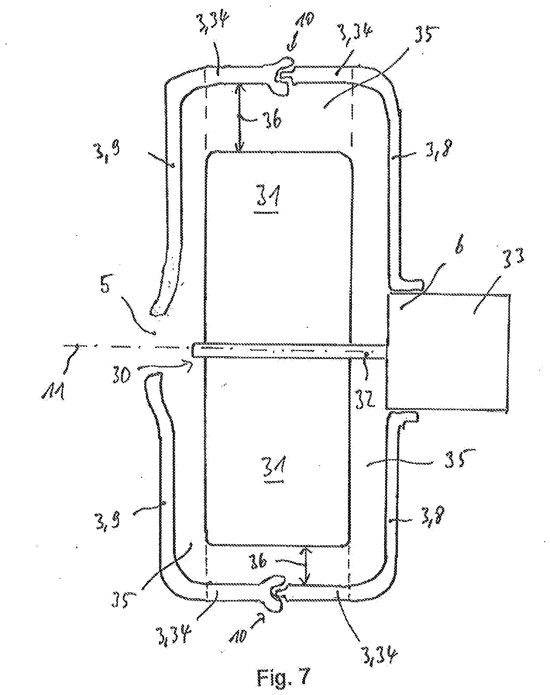

In den Fig. 2 bis 5 und in Fig. 7 ist ein erstes Ausführungsbeispiel eines Gebläsegehäuses 3 aus Kunststoff für das Radialgebläse 12 dargestellt, Das Gebläsegehäuse 3 besteht aus Kunststoff und ist Bestandteil des Gehäuses 13 aus Kunststoff der Kraftfahrzeugklimaanlage 1. Das Gebläsegehäuse 3 besteht aus einem ersten Teil 8 und einem zweiten Teil 9, die mittels einer Nut-Feder-Verbindung 10 miteinander verbunden sind. Hierzu weist das Gebläsegehäuse 3 außenseitig Verschraubungen 29 auf, mittels denen der erste und zweite Teil 8, 9 miteinander verbunden sind (Fig. 2). Innerhalb des Gebläsegehäuses 3 ist ein nicht in Fig. 2 bis 5 dargestelltes Laufrad 30 mit Schaufeln 31 angeordnet. Das Laufrad 30 mit Schaufeln 31 ist dabei mittels einer Antriebswelle 32 mit einem Gebläseelektrornctor 33 (Fig. 7) verbunden, so dass das Laufrad 30 mit den Schaufeln 31 eine Rotationsbewegung um eine Rotationsachse 11 ausführt. Die Rotationsachse 11 ist dabei gemäß der Darstellung in Fig. 2 horizontal ausgerichtet und in der Darstellung in Fig. 4 und 5 steht die Rotationsachse 11 senkrecht zu der Zeichenebene von Fig. 4 und 5 und in der Darstellung in Fig. 3 und 7 ist die Rotationsachse 11 parallel zu der Zeichenebene von Fig. 3 und 7 ausgerichtet. Das Gebläsegehäuse 3 weist eine Einströmöffnung 5 auf, durch welche die Luft in einen von dem Gebläsegehäuse 3 eingeschlossenen Innenraum 35 eingeleitet wird und in diesem Innenraum 35 ist auch das Laufrad 30 mit den Schaufeln 31 angeordnet. Dabei erfolgt die Einströmung durch die Einströmöffnung 5 (Fig. 2 und 7) im Wesentlichen parallel zu der Rotationsachse 11. Ferner ist das Gebiäsegehäuse 3 mit einer Ausströmöffnung 4 versehen. Die Luft strömt dabei aus der Ausströmöffnung 4 im Wesentlichen tangential zu der Rotationsachse 11 aus dem Gebläsegehäuse 3 wieder aus. Die Luft wird somit zunächst durch die Einströmöffnung 5 in axialer Richtung zu der Rotationsachse 11 eingeleitet, wird anschließend von den Schaufeln 31 des Laufrades 30 in radialer Richtung nach außen gefördert und strömt anschließend aus der Ausströmöffnung 4 in tangentialer Richtung aus dem Gebläsegehäuse 3 wieder aus. Außerdem weist das Gebläsegehäuse 3 eine Öffnung 6 zur Aufnahme des Gebläseelektromotors 33 auf. Die Öffnung 6 ist dabei gegenüberliegend zu der Einströmöffnung 5 bezüglich einer Richtung der Rotationsachse 11 ausgebildet (Fig. 2 und 7).

Die Ausströmöffnung 4 ist in tangentialer Richtung bezüglich der Rotationsachse 11 von einer Gebläsezunge 19 und einem Endrand 26 des Gebläsegehäuses 3 begrenzt. Das Laufrad 30 mit den Schaufeln 31 führt gemäß der Darstellung in Fig. 2, 4 und 5 eine Rotationsbewegung im Uhrzeigersinn aus. Ein radialer Abstand 36 (Fig. 7) zwischen den Schaufeln 31 des Laufrades 30 und dem Gebläsegehäuse 3 nimmt dabei in der Drehrichtung des Laufrades 30 beginnend von der Gebläsezunge 19 zu dem Endrand 26 zu ohne Berücksichtigung der Strömungsstörkörper 7. Eine erste Halbgerade 27 steht senkrecht auf der Rotationsachse 11 und schneidet diese (Fig. 4) und ferner schneidet die erste Halbgerade 27 die Gebläsezunge 19 bzw. liegt tangential auf der Gebläsezunge 19 auf. Eine zweite Halbgerade 28 schneidet ebenfalls die Rotationsachse 11 und steht senkrecht auf der Rotationsachse 11. Dabei ist die zweite Halbgerade 28 in Drehrichtung des Laufrades in einem Winkel α zu der ersten Halbgerade 27 ausgerichtet, so dass die erste und zweite Halbgerade 27, 28 den Winkel α aufspannen. In Fig. 4 beträgt der Winkel α ungefähr 30°. Abweichend hiervon kann der Winkel α auch im Bereich zwischen 20° und 90° liegen. Der von den beiden Halbgeraden 27, 28 eingeschlossene Bereich des Gebläsegehäuses 3 stellt einen Anfangsabschnitt 25 des Gebläsegehäuses 3 dar. Abweichend hiervon kann die erste Halbgerade 27 auch in einem Winkel β zu der Gebläsezunge 19 ausgerichtet sein, so dass zwischen der Gebläsezunge 19 und der ersten Halbgerade 27 kein Strömungsstörkörper 7 vorhanden ist (nicht dargestellt). Die Größe des Winkels β liegt dabei in einem Bereich kleiner als 20° oder 10°.

An dem Anfangsabschnitt 25 (Fig. 4 und 5) des Gebläsegehäuses 3 sind einteilig an dem Gebläsegehäuse 3 zwei Strömungsstörkörper 7 vorhanden. An den beiden Strömungsstörkörpern 7 ist somit der radiale Abstand 36 zwischen den Strömungsstörkörpern 7 bzw. dem Gebläsegehäuse 3 und den radialen Enden der Schaufeln 31 des Laufrades 30 kleiner als in einen geringen Abstand zu den Strömungsstörkörpern 7 in tangentialer Richtung. Dadurch kommt es zu einer lokalen Verengung des Strömungsraumes bzw. Innenraumes 35 zwischen dem Gebläsegehäuse 3 und den Schaufeln 31 des Laufrades 30 in radialer Richtung bezüglich der Rotationsachse 11. An dem Strömungsstörkörper 7 ist somit der radiale Abstand 36 zwischen dem Strömungsstörkörper 7 und den Schaufeln 31 kleiner als außerhalb des Strömungsstörkörpers 7, der radiale Abstand 36 (Fig. 7) zwischen dem Gebläsegehäuse 3 und den Schaufeln 31 in einem bezüglich der Rotationsachse 11 tangentialen Abstand 37 (Fig. 5) zu dem Strömungsstörkörper 7.

Dies führt zu einem Sekundärströmungssystem, das insgesamt zu einer homogeneren Geschwindigkeitsverteilung der Luft in dem Strömungsquerschnitt bzw. Spiraiströmungsquerschnitt zwischen dem Gebläsegehäuse 3 und den Schaufeln 31 des Laufrades 30 führt. Dadurch kann in vorteilhafter Weise das insbesondere niederfrequente Störgeräusch des Radialgebläses 12 wesentlich verringert werden. In dem in Fig. 3 dargestellten Teilschnitt des Gebläsegehäuses 3 in einer Schnittebene parallel zu der Rotationsachse 11 des Laufrades 30 mit den Schaufeln 31 bilden die beiden Strömungsstörkörper 7 eine im Wesentlichen V-förmige Kontur 20 der Oberfläche 23 an dem Gebläsegehäuse 3 aus.

Die Gebläsezunge 19 an dem ersten Teil 8 des Gebläsegehäuses 3 gemäß dem ersten Ausführungsbeispiel in den Fig. 2 und 5 ist im Wesentlichen parallel zu der Rotationsachse 11 ausgerichtet. Die Gebläsezütige 19 des zweiten Teils 9 des Gebläsegehäuses 3 ist in einem spitzen Winkel zu der Rotationsachse 11 ausgerichtet und stellt damit eine schräge Gebläsezunge 24 dar. Die schräge Gebläsezunge 24 hat die Aufgabe, zusätzlich zu den beiden Strömungsstörkörpern 7 zu einer homogeneren Geschwindigkeitsverteilung der Luft zwischen dem Gebläsegehäuse 3 und den Schaufeln des Laufrades beizutragen,

Fig. 7 zeigt einen Schnitt des Gebläsegehäuses 3 parallel zu der Rotationsachse 1 1 mit dem Laufrad 30, den Schaufeln, 31, der Antriebswelle 32 und dem Gebläseelektromotor 33. Dabei sind aufgrund des Schnittes die Strömungsstörkörper 7 in Fig. 7 nicht dargestellt. Bei einer Projektion der Schaufeln 31 senkrecht zu der Rotationsachse 11 auf das Gebläsegehäuse 3 stellt die Projektion (in Fig. 7 strichlierte Geraden dargestellt) der Schaufeln 31 auf das Gebläsegehäuse 3 einen Projektionsbereich 34 des Gebläsegehäuses 3 dar. Der Projektionsbereich 34 in Fig. 7 ist somit zwischen den beiden strichlierten Geraden an dem Gebläsegehause 3 vorhanden,

In Fig. 6 ist ein zweites Ausführungsbeispiel des Gebläsegehäuses 3 abgebildet. In der perspektivischen Teilansicht des Gebläsegehäuses 3 sind die Strämungsstörkörper 7 als Rippen 21 an dem Gebläsegehäuse 3 ausgebildet. Die Rippen 21 sind dabei im Wesentlichen, d. h. mit einer Abweichung von weniger als 30°, 20° oder 10°, senkrecht zu einer Tangente bezüglich der Rotationsachse 11 ausgerichtet. Ferner sind die Rippen 21 in analoger Weise zu dem ersten Ausführungsbeispiel gemäß Fig. 2 bis 5 an dem Anfangsabschnitt 25 des Gehläsegehäuses 3 zwischen den beiden Halbgeraden 27, 28 angeordnet.

Insgesamt betrachtet sind mit der erfindungsgemäßen Kraftfahrzeugklimaanlage 1 wesentliche Vorteile verbunden. An dem Anfangsabschnitt 25 des Gebläsegehäuses 3 sind Strömungsstörkörper 7 angeordnet, welche eine lokale Verengung des Strömungsraumes als spiralförmigen Strömungsraum zwischen dem Gebläsegehäuse 3 und den radialen Enden der Schaufeln 31 des Laufrades 30 bewirkt. Dadurch kann eine homogenere Geschwindigkeitsverteilung der Luft in diesem Strömungsraum erreicht werden und dadurch niederfrequente Störgeräusche, verursacht durch das Radialgebläse 12, im Wesentlichen ausgeschlossen werden.

### Bezugszeichenliste

- 1: Kraftfahrzeugklimaanlage
- 2: Heizeinrichtung
- 3: Gebläsegehäuse
- 4: Ausströmöffnung
- 5: Einströmöffnung
- 6: Öffnung für Gebläseelektromotor
- 7: Strömungsstörkörper
- 8: Erster Teil des Gebläsegehäuses
- 9: Zweiter Teil des Gebläsegehäuses
- 10: Nut-Feder-Verbindung
- 11: Rotationsachse
- 12: Radialgebläse
- 13: Gehäuse
- 14: Bodenwandung
- 15: Gehäusewandung
- 16: Austrlttsabschnitt
- 17: Filter
- 18: Kältemittelverdampfer
- 19: Gebläsezunge des Gebläsegehäuses an der Ausströmöffnung
- 20: V-förmige Kontur
- 21: Rippe
- 22: Kanal
- 23: Oberfläche
- 24: Schräge Gebläsezunge
- 25: Anfangsabschnitt des Gebläsegehäuses
- 26: Endrand des Gebläsegehäuses an der Ausströmöffnung
- 27: Erste Halbgerade
- 28: Zweite Halbgerade
- 29: Verschraubung
- 30: Laufrad
- 31: Schaufeln
- 32: Antriebswelte
- 33: Gebläseefektromotor
- 34: Projektionsbereich
- 35: Innenraum
- 36: Radialer Abstand zwischen Gebläsegehäuse und Schaufeln
- 37: Tangentialer Abstand

## Patentansprüche

1. Kraftfahrzeugklimaanlage (1), umfassend
- ein Gehäuse (13),
- ein Radialgebläse (12) mit einem Gebläsegehäuse (3), das eine axiale Einströmöffnung (5) und eine tangentiale Ausströmöffnung (4) aufweist, mit einem innerhalb des Gebläsegehäuses (3) angeordneten Laufrad (30) mit Schaufeln (31) von dem um eine Rotationsachse (11) eine Rotationsbewegung ausführbar ist,
- vorzugsweise einen Kältemittelverdampfer (18) zum Kühlen einer einem Fahrzeuginnenraum zuzuführenden Luft,
- eine Heizeinrichtung (2) zum Erwärmen der dem Fahrzeuginnenraum zuzuführenden Luft,
wobei an dem Gebläsegehäuse (3) innenseitig wenigstens ein Strömungsstörkörper (7) ausgebildet ist, **dadurch gekennzeichnet, dass** der wenigstens eine Strömungsstörkörper ausschließlich, an einem Projektionsbereich (34) der Schaufeln (31) senkrecht zu der Rotationsachse (11) auf das Gebläsegehäuse (3) ausgebildet ist, wobei an dem wenigstens einen Strömungsstörkörper (7) der radiale Abstand (36) zwischen dem wenigstens einen Strömungsstörkörper (7) und den Schaufeln (31) um 1 bis 15 mm kleiner ist als außerhalb des wenigstens einen Strömungsstörkörpers (7), wobei der radiale Abstand (36) zwischen dem Gebläsegehäuse (3) und den Schaufeln (31), in einem bezüglich der Rotationsachse (11) tangentialen Abstand (37) von weniger als 5 cm, 3 cm oder 1 cm zu dem wenigstens einen Strömungsstörkörper (7) beträgt.

2. Kraftfahrzeugklimaanlage nach Anspruch 1, **dadurch gekennzeichnet, dass** der wenigstens eine Strömungsstörkörper (7) zusätzlich in einem axialen Abstand in Richtung der Rotationsachse (11) zu dem Projektionsbereich (34) an dem Gebläsegehäuse (3) ausgebildet ist.

3. Kraftfahrzeugklimaanlage nach Anspruch 2, **dadurch gekennzeichnet, dass** der axiale Abstand in Richtung der Rotationsachse (11) weniger als 5 cm, 3 cm, 1 cm oder 0,5 cm beträgt.

4. Kraftfahrzeugklimaanlage nach einem der vorhergehenden Ansprüche, **dadurch gekennzeichnet, dass** der wenigstens eine Strömungsstörkörper (7), insbesondere ausschließlich, an einem Anfangsabschnitt (25) des Gebläsegehäuses (3) ausgebildet ist und der Anfangsabschnitt (25) an der Ausströmöffnung (4) an einer Gebläsezunge (19) des Gebläsegehäuses (3) beginnt, in einer tangentialen Richtung in Rotationsrichtung des Laufrades (30) mit Schaufeln (31).

5. Kraftfahrzeugklimaanlage nach Anspruch 4, **dadurch gekennzeichnet, dass** der Anfangsabschnitt (25) eine Ausdehnung zwischen einer ersten und zweiten Halbgeraden (27, 28) aufweist und sich die erste und zweite Halbgerade (27, 28) in einem Schnittpunkt schneiden und dem Schnittpunkt der Rotationsachse (11) des Laufrades (30) mit den Schaufeln (31) entspricht und die erste und zweite Halbgerade (27, 28) senkrecht auf der Rotationsachse (11) stehen.

6. Kraftfahrzeugklimaanlage nach Anspruch 5, **dadurch gekennzeichnet, dass** die erste und zweite Halbgerade (27, 28) einen Winkel von weniger als 150°, 120° oder 90° aufspannen und die erste Halbgerade (27) an der Gebläsezunge (19) des Gebläsegehäuses (3) an der Ausströmöffnung (4) angeordnet ist oder einem Winkel von weniger als 20° oder 10° in Richtung der Rotationsrichtung des Laufrades (30) zu der Gebläsezunge (19) ausgerichtet ist und die zweite Halbgerade (28) den Winkel in Richtung der Rotationsrichtung des Laufrades (30) von der ersten Halbgerade (27) zu der zweiten Halbgerade (28) aufspannt.

7. Kraftfahrzeugklimaanlage nach einem der vorhergehenden Ansprüche, **dadurch gekennzeichnet, dass** der wenigstens eine Strömungsstörkörper (7) in einem Schnitt mit einer Schnittebene, so dass die Rotationsachse (11) in der Schnittebene liegt, eine im Wesentlichen V-förmige Kontur (20) an einer Innenseite aufweist und/oder die Kraftfahrzeugklimaanlage (1) mehrere Strömungsstörkörper (7) aufweist und/oder die Strömungsstörkörper (7) als Rippen (21) an dem Gebläsegehäuse (3) ausgebildet sind.

8. Kraftfahrzeugklimaanlage nach einem der vorhergehenden Ansprüche, **dadurch gekennzeichnet, dass** an dem Gebläsegehäuse (3) an der Ausströmöffnung (4) eine schräge Gebläsezunge (24) ausgebildet ist und/oder das Radialgebläse (12) einen Gebläseelektromotor zum Antrieb des Laufrades mit den Schaufeln umfasst.

## Claims

1. A vehicle air-conditioning system (1), comprising
- a housing (13),
- a radial fan (12) with a fan housing (3) having an axial inflow opening (5) and a tangential outflow opening (4), with an impeller (30) with blades (31) which is arranged inside the fan housing (3) and from which a rotational movement around an axis of rotation (11) can be carried out,
- preferably a coolant evaporator (18) for cooling air to be supplied to a vehicle interior,
- a heating device (2) for heating the air to be supplied to the vehicle interior,
wherein at least one flow-disturbing body (7) is formed at the inside of the fan housing (3), **characterised in that** the at least one flow-disturbing body is exclusively formed on the fan housing (3) in a projection region (34) of the blades (31) perpendicular to the axis of rotation (11), wherein the radial distance (36) between the at least one flow-disturbing body (7) and the blades (31) on the at least one flow-disturbing body (7) is 1 to 15 mm smaller than outside the at least one flow-disturbing body (7), wherein the radial distance (36) between the fan housing (3) and the blades (31) is less than 5 cm, 3 cm or 1 cm to the at least one flow-disturbing body (7) in a tangential distance (37) with regard to the axis of rotation (11).

2. The vehicle air-conditioning system according to claim 1, **characterised in that** the at least one flow-disturbing body (7) is additionally formed on the fan housing (3) in an axial distance in the direction of the axis of rotation (11) to the projection region (34) .

3. The vehicle air-conditioning system according to claim 2, **characterised in that** the axial distance in the direction of the axis of rotation (11) is less than 5 cm, 3 cm, 1 cm or 0.5 cm.

4. The vehicle air-conditioning system according to one of the preceding claims, **characterised in that** the at least one flow-disturbing body (7) is, in particular exclusively, formed in an initial portion (25) of the fan housing (3) and the initial portion (25) begins at a fan tongue (19) of the outflow opening (4) of the fan housing (3), in a tangential direction in the rotational direction of the impeller (30) with blades (31) .

5. The vehicle air-conditioning system according to claim 4, **characterised in that** the initial portion (25) has an extension between a first and a second half-line (27, 28) and the first and second half-line (27, 28) intersect in an intersection and corresponds to the intersection of the axis of rotation (11) of the impeller (30) with the blades (31) and the first and second half-line (27, 28) are perpendicular on the axis of rotation (11).

6. The vehicle air-conditioning system according to claim 5, **characterised in that** the first and second half-line (27, 28) span an angle of less than 150 °, 120 ° or 90 ° and the first half-line (27) is arranged on the fan tongue (19) at the outflow opening (4) of the fan housing (3) or is arranged in an angle of less than 20 ° or 10 ° in the direction of the rotational direction of the impeller (30) to the fan tongue (19) and the second half-line (28) spans the angle in the direction of the rotational direction of the impeller (30) from the first half-line (27) to the second half-line (28).

7. The vehicle air-conditioning system according to one of the preceding claims, **characterised in that** the at least one flow-disturbing body (7) lies in a section with a section plane so that the axis of rotation (11) is in the section plane, has a substantially V-shaped contour (20) at an inside and/or the vehicle air-conditioning system (1) has several flow-disturbing bodies (7) and/or the flow-disturbing bodies (7) are formed as ribs (21) on the fan housing (3) .

8. The vehicle air-conditioning system according to one of the preceding claims, **characterised in that** an oblique fan tongue (24) is formed at the outflow opening (4) of the fan housing (3) and/or the radial fan (12) comprises a fan electric motor for driving the impeller with the blades.

## Revendications

1. Système de climatisation d'un véhicule automobile (1), comprenant :
- un carter (13),
- un ventilateur centrifuge (12) comprenant un carter de ventilateur (3) qui présente une ouverture d'entrée de flux axiale (5) et une ouverture de sortie de flux tangentielle (4), comprenant une roue mobile (30) disposée à l'intérieur du carter de ventilateur (3), roue mobile qui est dotée de pales (31) et par laquelle un mouvement de rotation peut être exécuté autour d'un axe de rotation (11),
- de préférence un évaporateur de fluide frigorigène (18) servant au refroidissement d'un air à fournir à l'habitacle d'un véhicule,
- un dispositif de chauffage (2) servant au chauffage de l'air à fournir à l'habitacle du véhicule,
où au moins un élément perturbateur de l'écoulement (7) est configuré, intérieurement, sur le carter de ventilateur (3),
**caractérisé en ce que** l'élément perturbateur de l'écoulement, au moins au nombre de un, est configuré sur le carter de ventilateur (3), au niveau d'une zone de projection (34) des pales (31), de manière perpendiculaire à l'axe de rotation (11), où, au niveau de l'élément perturbateur de l'écoulement (7), au moins au nombre de un, la distance radiale (36) comprise entre l'élément perturbateur de l'écoulement (7), au moins au nombre de un, et les pales (31), est de 1 mm à 15 mm plus petite qu'à l'extérieur de l'élément perturbateur de l'écoulement (7), au moins au nombre de un, où la distance radiale (36) comprise entre le carter de ventilateur (3) et les pales (31), dans une distance tangentielle (37) par rapport à l'axe de rotation (11), est de moins de 5 cm, de 3 cm ou de 1 cm par rapport à l'élément perturbateur de l'écoulement (7), au moins au nombre de un.

2. Système de climatisation d'un véhicule automobile selon la revendication 1, **caractérisé en ce que** l'élément perturbateur de l'écoulement (7), au moins au nombre de un, est configuré sur le carter de ventilateur (3), en outre suivant une distance axiale en direction de l'axe de rotation (11) par rapport à la zone de projection (34).

3. Système de climatisation d'un véhicule automobile selon la revendication 2, **caractérisé en ce que** la distance axiale en direction de l'axe de rotation (11) est de moins de 5 cm, de 3 cm, de 1 cm ou de 0,5 cm.

4. Système de climatisation d'un véhicule automobile selon l'une quelconque des revendications précédentes, **caractérisé en ce que** l'élément perturbateur de l'écoulement (7), au moins au nombre de un, est configuré, en particulier de façon exclusive, sur une partie initiale (25) du carter de ventilateur (3), et la partie initiale (25) formée au niveau de l'ouverture de sortie de flux (4) commence sur une languette de ventilateur (19) du carter de ventilateur (3), suivant une direction tangentielle dans le sens de rotation de la roue mobile (30) dotée de pales (31).

5. Système de climatisation d'un véhicule automobile selon la revendication 4, **caractérisé en ce que** la partie initiale (25) présente une étendue comprise entre une première et une seconde demi-droite (27, 28), et la première et la seconde demi-droite (27, 28) se coupent au niveau d'un point d'intersection, ladite partie initiale correspondant au point d'intersection de l'axe de rotation (11) de la roue mobile (30) dotée des pales (31), et la première et la seconde demi-droite (27, 28) sont perpendiculaires à l'axe de rotation (11).

6. Système de climatisation d'un véhicule automobile selon la revendication 5, **caractérisé en ce que** la première et la seconde demi-droite (27, 28) définissent un angle de moins de 150°, de 120° ou de 90°, et la première demi-droite (27) est disposée, au niveau de l'ouverture de sortie de flux (4), sur la languette de ventilateur (19) du carter de ventilateur (3), ou bien est orientée en formant un angle de moins de 20° ou de 10° suivant la direction du sens de rotation de la roue mobile (30) par rapport à la languette de ventilateur (19), et la seconde demi-droite (28) définit l'angle suivant la direction du sens de rotation de la roue mobile (30), depuis la première demi-droite (27) jusqu'à la seconde demi-droite (28).

7. Système de climatisation d'un véhicule automobile selon l'une quelconque des revendications précédentes, **caractérisé en ce que** l'élément perturbateur de l'écoulement (7), dans une coupe avec un plan de coupe, de manière telle que l'axe de rotation (11) se trouve dans le plan de coupe, présente, sur un côté intérieur, un contour (20) pratiquement en forme de V et / ou le système de climatisation du véhicule automobile (1) présente plusieurs éléments perturbateurs de l'écoulement (7) et / ou les éléments perturbateurs de l'écoulement (7) sont conçus comme des ailettes (21) placées sur le carter (3) du ventilateur.

8. Système de climatisation d'un véhicule automobile selon l'une quelconque des revendications précédentes, **caractérisé en ce qu'**une languette de ventilateur oblique (24) est configurée sur le carter (3) du ventilateur, au niveau de l'ouverture de sortie de flux (4), et / ou le ventilateur centrifuge (12) comprend un moteur électrique de ventilateur servant à l'entraînement de la roue mobile dotée des pales.
